# EUROPEAN PATENT SPECIFICATION

(11) **EP 1 760 379 B1**
(45) Date of publication and mention of the grant of the patent: **16.02.2011**
(21) Application number: 04742083.1
(22) Date of filing: 22.06.2004
(51) Int. Cl.: F16L 3/10

(54) **HIGH-TOLERANCE ANTI-TRACTION COUPLER**
ANTIZUGVERBINDER MIT GROSSEN TOLERANZEN
JOINT ANTITRACTION A TOLERANCE ELEVEE

(43) Date of publication of application: 07.03.2007
(73) Proprietor: Belgicast Internacional, s.l.u., 48100 Munguia, Vizcaya (ES)
(72) Inventor: AZPIAZU NUÑEZ, José Antonio, MUNGUIA, 48100 VIZCAYA (ES)
(74) Representative: Ezcurra Zufia, Maria Antonia
(86) International application number: PCT/ES2004/070044
(87) International publication number: WO 2006/000594

(56) References cited:
- DE-C- 19 503 301
- DE-U- 9 218 211
- US-A- 5 297 826
- US-A- 5 476 290

## Description

### OBJECT OF THE INVENTION

The object of the present invention consists of a high tolerance strain-relief joint of the type of joints used in the connection of pipes to other assemblies of parts such as those used in valve bodies.

Such a joint is shown for example in Document DE19503301C1.

The present invention is characterised by the special layout and design of the elements forming the joint, both of the biting parts and of the connecting parts used, which enable a joint to be obtained that prevents strain on the pipe, besides producing a general-purpose joint that is suitable and adaptable for use with any pipe diameter.

The object of the present invention also comprises every one of the biting parts used in the formation of the joint, as well as the connecting parts used in the union of the biting parts.

The present invention, therefore, lies within the sphere of joints used in attaching the ends of pipes to the items of equipment to which they are going to be connected, and particularly of strain-relief joints that prevent the disengagement of a pipe after being fastened on the body to which it is to be connected.

### BACKGROUND OF THE INVENTION

The purpose of strain-relief joints is to prevent pipes being detached from their connections. It often happens that with temperature changes, being made of deformable plastic materials and castings, pipes undergo dimensional changes with the variation in temperature. This means that pipes may develop a certain play at their connections, so that the pipe could even become detached or they could also be uncoupled by the water hammer caused by sudden valve closure.

For the foregoing reasons it is necessary to provide pipe connections with strain-relief joints that will prevent pipe detachment, even though dimensional changes may have taken place due to variations in temperature or water hammer.

The strain-relief joints currently used are made to match up in size with the diameters of the pipes with which they are going to be used, i.e. every pipe diameter uses a different type of strain-relief joint.

It is certainly a drawback to have to make as many types of strain-relief joint as we have pipe diameters. It is therefore the aim of the present invention to overcome the above-mentioned drawbacks, developing for this purpose a high tolerance or universal strain-relief joint, which is adaptable to the pipe diameter, i.e. it may be used with any pipe diameter.

### OBJECT OF THE INVENTION

The object of the present high tolerance strain-relief joint invention consists of a strain-relief ring duly secured in the inner space of the flange on which the pipe fits, the joint being made up of a series of individual biting parts linked together in the form of a rosary.

The fact that the joint is made up of individual parts joined to one another endows the joint with a certain measure of articulation and adaptability.

The adaptability of the joint to the different pipe diameters is achieved by the characteristics presented by the connecting pieces, by inserting them to a greater or lesser extent in the biting pieces, so that the space left between pieces is smaller, or else by deforming the connecting pieces so that the arc they cover is smaller, whereby the joint may be adapted to the different pipe diameters, within an admissible range of course.

The individual biting pieces have oblique side faces converging towards their bottom face, so that when the pieces pivot they do not come into contact with one another at their inner face, whereby the joint cannot be closed.

There are round recesses of a specific diameter machined which are connected by as through drill hole of a smaller diameter than the diameter of the side openings.

Furthermore, the biting pieces seen from the side present an irregular triangular-shaped profile where the bottom side is horizontal, on which are arranged the sawteeth, the other parts of the triangle, one of them, the one which is placed innermost, is more angled, while the outermost face is almost upright.

The sawteeth have the angled profile almost parallel to the most angled inner side.

The constructional features of this biting piece are designed in order to prevent the disengagement of the pipe, facilitating however the insertion of the pipe.

Once the end of the pipe is housed in the body on which it has to be fastened and it has been passed through a strain relief joint, when an attempt is made to withdraw it, the sawteeth dig into the outside edge of the pipe, so that the greater the withdrawal force applied, the more the teeth dig into the edge of the pipe through causing the biting piece to pivot, so that the pipe is locked with no possibility of disengagement.

### EXPLANATION OF THE FIGURES

To supplement the description that is going to be given below and in order to facilitate a clearer understanding of its characteristics, the present descriptive report is accompanied by a set of drawings showing the most significant details of the invention for informative but never restrictive purposes.

Figure 1 shows a perspective view of one of the biting pieces making up the strain-relief joint.
Figure 2 shows a perspective view of one of the biting piece connecting pieces.
Figure 3 shows a view of how the biting pieces are joined by means of the connecting pieces.
Figure 4 is an underside view of the foregoing assembly.
Figure 5 shows two perspective representations of another type of biting piece used in combination with another type of connecting piece.
Figure 6 shows a perspective representation of another kind of connecting piece.
Figure 7 shows an underside view of how the biting pieces and the connecting pieces used are joined.
Figure 8 shows how a strain-relief joint is conformed in one of the forms of embodiment of the invention.
Figure 9 shows how a strain-relief joint is conformed in another of the forms of embodiment.
Figure 10 shows an elevational and a side view of a biting piece used in the conformation of the strain-relief joints.

### PREFERRED EMBODIMENT OF THE INVENTION

A mode of preferred embodiment of the invention is described in the light of the figures, along with an explanation of the drawings.

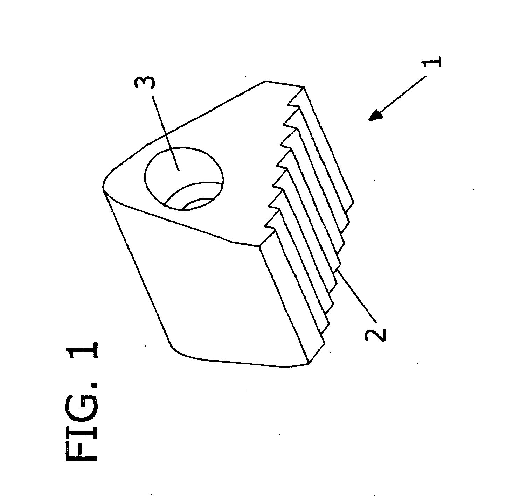

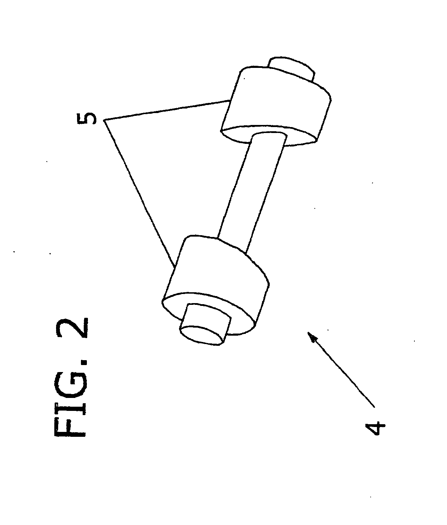

In figure 1, we observe a biting piece (1), which, as we may observe, has a triangular profile provided with sawteeth (2) on its horizontal underside, and on the side faces there are round recesses (3), where the connecting pieces (4) represented in figure 2 are housed.

The function of the connecting pieces (4) is to joint the biting pieces (1) together. The ends of the connecting pieces have round shoulders (5) which are housed in the round recesses (3) provided in the sides of the biting pieces (1).

The inner side walls of the shoulders (5) of the connecting pieces (4) present a certain inclination in accordance with the inclination presented by the side faces of the biting pieces (1).

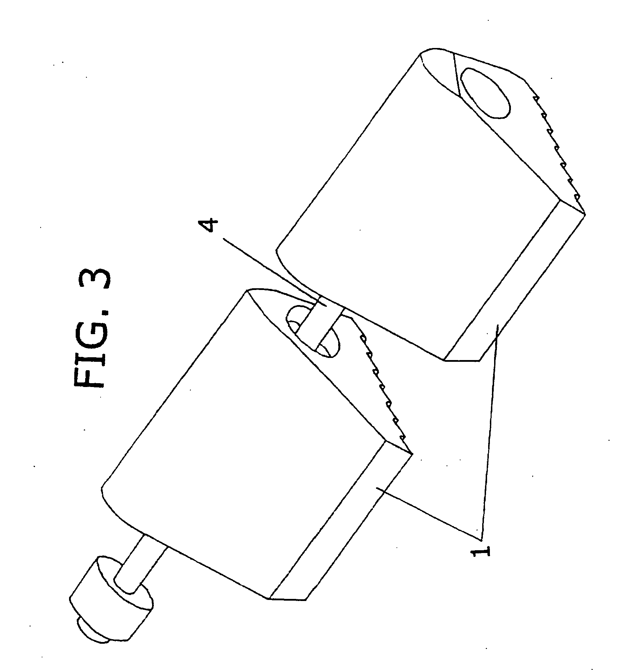

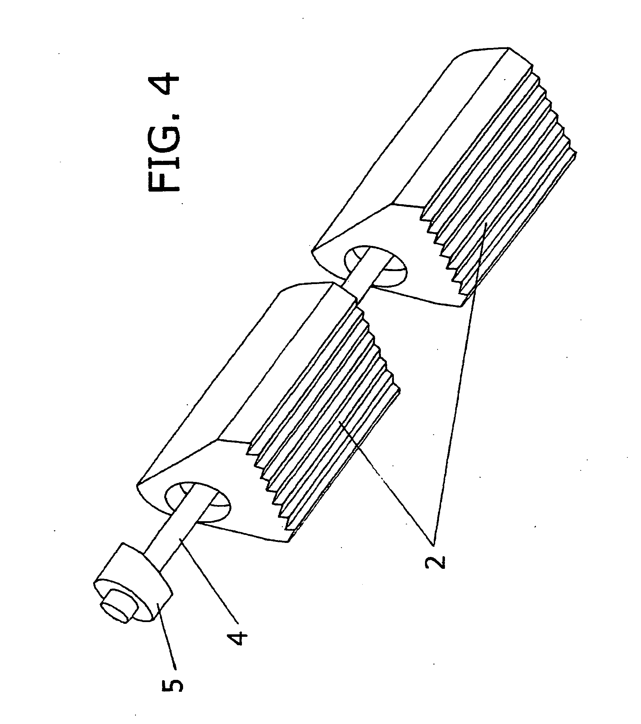

In figures 3 and 4 we observe how the biting pieces (1) are joined by means of the connecting pieces (4), while the shoulders (5) are engaged in the recesses (3).

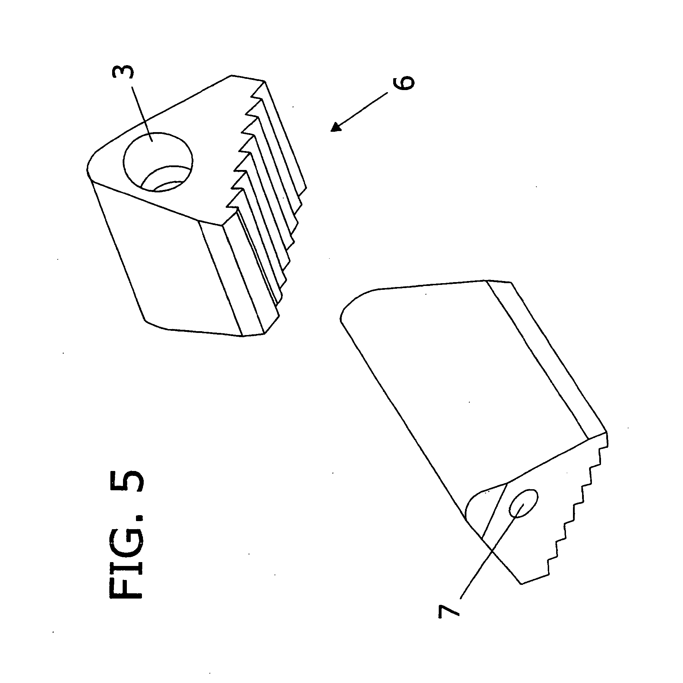

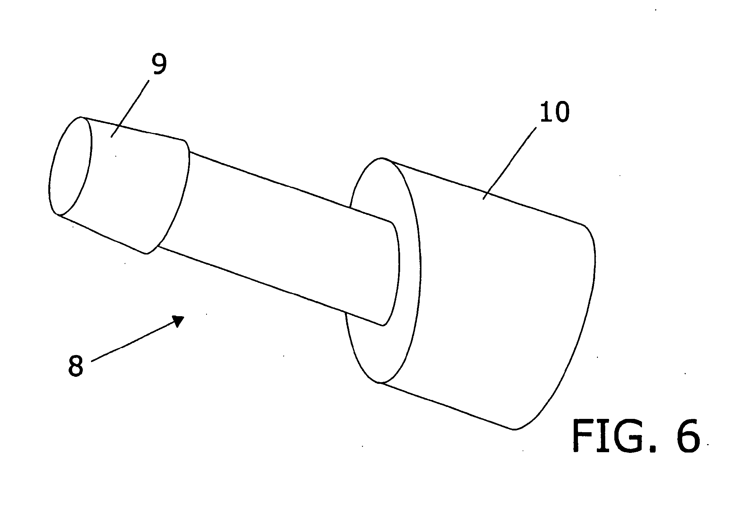

In figures 5 to 7 we observe another form of embodiment based on the same principle, changing only one or two of the structural features of the parts.

In figure 5, we observe a biting piece (6), which has a recess (3) in one of its sides the same as those presented by biting pieces (1), whereas the other of the side faces has a smaller diameter round recess (7).

Furthermore, the connecting piece (8) used now only has an annular shoulder (10) with an inclined inner face at one of its ends, as at the other end it is frustoconical shaped in order to facilitate fastening in the round recess (7) in the biting piece (6).

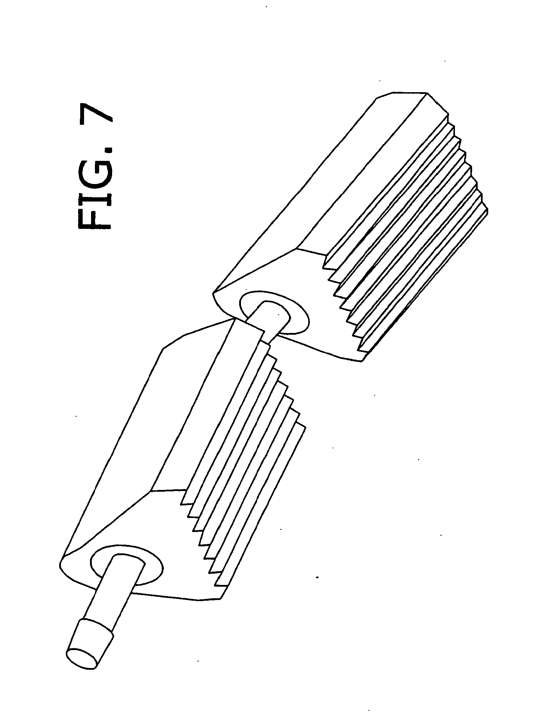

Figure 7 shows how the biting pieces are engaged with one another by means of the connecting pieces (8).

The space left between the biting pieces, both in figure 7 and in figure 4, may be adjusted using the constructional features of the connecting pieces (4) and (8).

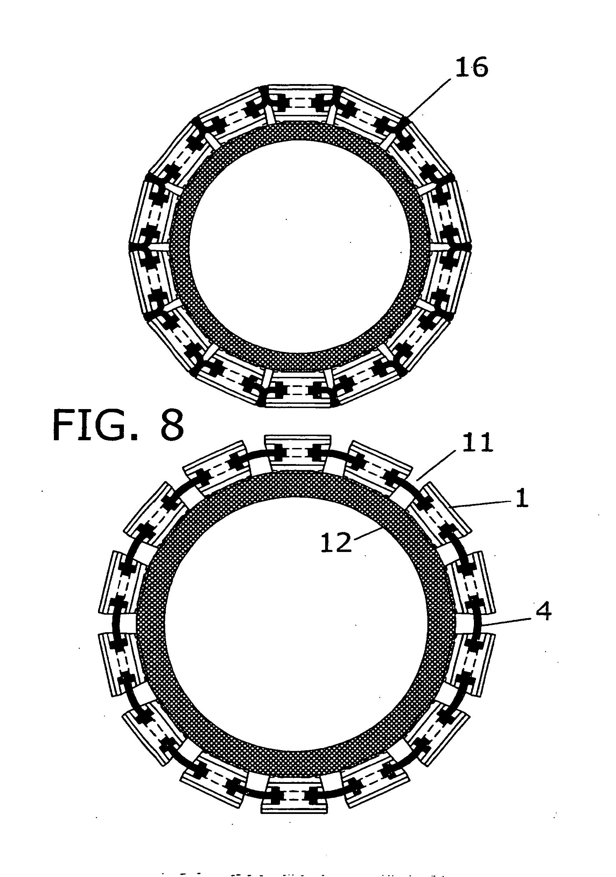

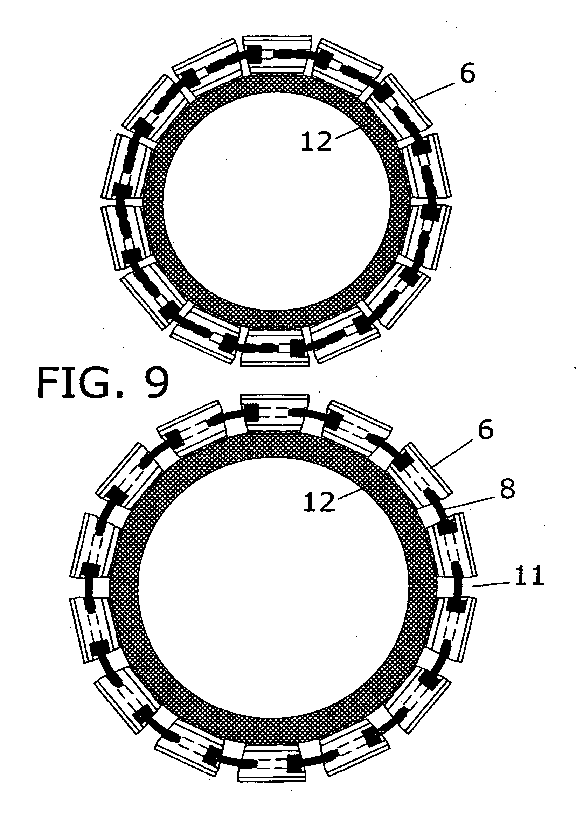

This may be seen in greater detail in figures 8 and 9. In figure 8 we observe that the joint or space (11) remaining between the biting pieces (1) may be modified by bending the connecting rod of the connecting pieces (4). See the upper figure where, in order to be able to fix a smaller diameter pipe, a deformation (16) has taken place and it is accommodated in the space (11) between the biting pieces (1).

In figure 9, where both biting pieces (6) and connecting pieces (8) are used, adaptation to the different diameters is achieved by means of the extent to which the end with the frustoconical shoulder (9) is inserted into the hole (7), so that the closeness of the biting pieces (6) varies accordingly.

In these figures we observe how, with a single type of joint which has the same number of biting pieces, it may be adapted to different pipe diameters by simply modifying the space between the biting pieces.

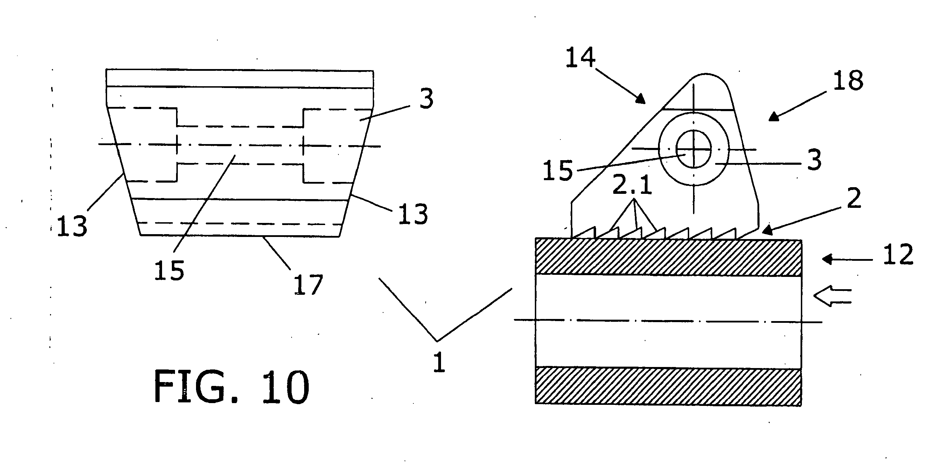

Having seen the parts that make up the strain-relief joint, its connection and how it adapts to different piping diameters, we will now proceed to explain in figure 10 the geometric and constructional features presented by the biting pieces which give rise to their strain-relief effects.

As observed, the strain-relief parts (1) and (6) have their side faces (13) arranged obliquely and converging towards their inner face (17).

The side faces (13) have round recesses (3) which are connected by a smaller diameter through-hole (15).

Seen from the side, the biting pieces (1) and (6) present a triangular profile in which its inner face (17) is horizontal and on which sawteeth (2) are disposed. As for the other two faces of the triangular profile, one of them, the inner face (14), presents a smaller inclination than the other outer face (18), which presents an almost vertical inclination.

The inclined profile (2.1) of the sawteeth (2.1) is disposed almost parallel to the inner face (14), whereby it successfully facilitates the insertion of the pipe (12) in the direction marked by the arrow but not in the opposite direction, as the sawteeth would dig into the pipe, and as most of the teeth are provided on the inside, i.e. to the left of the drill hole (3), if an attempt is made to withdraw the pipe, a torque is applied on the drill hole (3) at the axis of rotation, which would make the biting piece (1) tum in the direction so that the sawteeth dig into the pipe even harder and prevent it from being disengaged.

The materials used in the manufacture of the biting pieces could be any metal, being preferably sintered material, which is baked metal powder which is given a certain hardness. Furthermore, the material used in the connecting pieces must be a deformable material, such as flexible plastic so as to be able to subject it to the deformations as required for the fit of the strain-relief joint to the pipes.

It is not considered necessary to make this description more extensive for any expert on the matter to be able to appreciate the scope of the invention and the advantages stemming from same.

The materials, shape, size and layout of the component parts are open to variation providing that the essential nature of the invention is not altered.

The terms in which this report is described should always be taken in the broadest non-restrictive sense.

## Claims

1. High clearance strain-relief joint from among those joints used in connecting the end of pipes to the bodies of units to which they have to be fastened and which prevent strain of the pipe wherein the joint is adaptable to different diameters of pipes made of any material but with the same configuration and wherein the adjustment to the dimensions of the pipe is achieved on the basis of the characteristics of the connecting pieces, wherein the joint comprises:
- A series of individual biting pieces linked together, wherein these biting pieces present on their inner face saw teeth arranged so that they dig into the outside edge of the pipe.
- Means for linking together the individual biting pieces made of deformable plastic.
**characterized in that**:
- The biting pieces have oblique side faces converging their lower face
- The oblique faces have been provided with round recesses connected by a smaller diameter through hole
- The linking means are made up deformable connection pieces whose ends arc inserted in the round recesses provided on the sides of the biting pieces.

2. - High clearance strain-relief joint, according to claim 1, **characterized in that** the biting pieces present a triangular profile in which its under side (17) is horizontal and on which sawteeth are disposed, the other two faces of the triangular profile, one of them, the inner face (17) presents a smaller inclination than the other outer face (18), which presents an almost vertical inclination and wherein the inclined profile (2.1) of the sawteeth is disposed almost parallel to the inner face (14).

3. - High clearance strain-relief joint, according to claim 1, **characterized in that** the connecting pieces (4) presents shoulders (5) on its ends that engage in the circular recesses (3) in the biting pieces (1), while the inner face of the shoulders is disposed obliquely.

4. - High clearance strain-relief joint, according to claim 1, **characterized in that** the adaptation of the joint to the different diameters of the pipes is achieved by deforming the connecting piece by folding up part of its length and engaging this deformation in the space between the biting pieces

5. - High clearance strain-relief joint, according to claim 1, **characterized in that** the biting pieces present oblique side faces converging towards their inner face, one of said oblique faces being provided with a circular recess (3), wherein the other side has a drill hole (7) of smaller diameter than the recess(3); it presents a triangular profile in which its under side is horizontal and on which sawteeth (2) are disposed. The other two faces of the triangular profiles, one of them, the inner face 814) presents a smaller inclination than the other outer face (18), which presents an almost vertical inclination. The inclined profile (2.1) of the sawteeth is disposed almost parallel to the inner face (14).

6. High clearance strain-relief joint, according to claims 1 to 5, **characterized in that** the connecting piece presents at one of its ends a shoulder with engages in the circular recess (3) in the biting piece (6), while the other end has a frustoconical profile shoulder (9) for insertion in the recess (7).

7. - High clearance strain-relief joint, according to claim 1 or 6, **characterized in that** the adaptation of the joint to the different pipe diameters is achieved by varying how far the connecting piece (8) that has a frustoconical shoulder (9) is inserted in the recess (7) in the biting piece (6).

## Patentansprüche

1. Zugentlastungsstück mit großer Durchgangshöhe unter den Verbindungsstücken für die Verbindung des Rohrendes mit dem Gehäuse der Einheiten, um Spannungen im Rohr zu vermeiden. Das Verbindungsstück muss durch seine Eigenschaften an verschiedener Rohrabmessungen und Rohre aus verschiedenen Materialien mit gleicher Konfiguration anpassbar sein,Das Verbindungsstück setzt sich aus folgenden Komponenten zusammen:
- Eine Reihe von einzelnen, miteinander verbundenen Zahnstücken, wobei diese Zahnstücke auf der Innenseite Sägezähne aufweisen, so dass diese sich in die Außenkante des Rohrs drücken
- Hilfsmittel, um die einzelnen Kunststoffk-Zahnstücke miteinander zu verbinden
Wobei:
- Die Zahnstücke abgeschrägte Seitenflächen haben, welche unten konvergieren
- Die abgeschrägten Flächen weisen runde Einschnitte auf, die mit dem kleineren Durchmesser durch ein Loch miteinander verbunden werden
- Das Anbindungsmaterial besteht aus verformbaren Verbindungsstücken, deren Enden in die seitlichen runden Einschnitte der Zahnstücke hineinführen

2. Zugentlastungsstück mit großer Durchgangshöhe gemäß Anforderung 1, das sich **dadurch** auszeichnet, dass die Zahnstücke ein dreieckiges Profil aufweisen, dessen Unterseite (17) horizontal liegt und dessen Sägezähne geneigt sind, während von den restlichen zwei Flächen des Dreiecksprofils auf der Innenseite (17) eine geringere Neigung als auf der Außenseite (18) aufweisen undi letztere eine beinahe vertikale Neigung aufweist und das geneigte Profil (2.1) der Sägezähne fast parallel zur Innenfläche geneigt ist (14).

3. Zugentlastungsstück mit großer Durchgangshöhe gemäß Anforderung 1, das sich **dadurch** auszeichnet, dass die Verbindungsstücke (4) an den Enden Schultern (5) besitzen, die sich in die runden Einschnitte (3) der Zahnstücke (1) einpassen, wobei die Innenfläche der Schultern schräg geneigt ist.

4. Zugentlastungsstück mit großer Durchgangshöhe gemäß Anforderung 1, das sich **dadurch** auszeichnet, dass die Anpassung des Verbindungsstücks an die verschiedenen Rohrdurchmesser durch Verformen und Aufklappen eines Teils seiner Länge erfolgt, um den verformten Teil dann in den Raum zwischen den Zahnstücken einzubringen.

5. Zugentlastungsstück mit großer Durchgangshöhe gemäß Anforderung 1, das sich **dadurch** auszeichnet, dass die Zahnstücke geschrägte Flächen aufweisen, die nach innen zusammenlaufen, wobei eine der Schrägflächen kreisförmige Einschnitte (3) und die andere ein Bohrloch (7) aufweist, dessen Durchmesser kleiner ist als der des Einschnittes (3); und ein dreieckiges Profil besitzt, dessen Unterseite horizontal liegt und auf dem Sägezähne (2) angeordnet sind. Von den anderen beiden Oberflächen des Dreiecksprofils zeigt die Innenfläche (14) einen kleineren Einschnitt als die Außenfläche (18), welche beinahe vertical geneigt ist. Das geneigte Profil (2.1) der Sägezähne ist fast parallel zur Innenfläche anbeordnet (14).

6. Zugentlastungsstück mit großer Durchgangshöhe gemäß den Anforderungen 1 bis 5, das sich **dadurch** auszeichnet, dass das Verbindungsstück an einem Ende eine Schulter besitzt, die in den runden Einschnitt (3) des Zahnstücks (6) passt, während das andere Ende eine kegelstumpfförnig ausgebildete Schulter (9) besitzt, die in den Einschnitt (7) passt.

7. Zugentlastungsstück mit großer Durchgangshöhe gemäß den Anforderungen 1 oder 6, das sich **dadurch** auszeichnet, dass die Anpassung des Verbindungsstücks an die verschiedenen Rohrdurchmesser durch Variieren der Einlasstiefe des Verbindungsstückes (8) mit der kegelstumpfförnigen Schulter (9) in den Einschnitt (7) des Zahnstückes (6) erzielt wird.

## Revendications

1. Joint de collier à grand dégagement parmi les joints utilisés pour joindre les bouts de tuyaux aux corps de l'unité à laquelle ils doivent être rattachés et qui permettent d'éviter la tension du tuyau sur lequel le joint est adaptable à différents diamètres de tuyaux de n'importe quel matériau mais avec la même configuration et sur lesquels les dimensions du tuyau sont réalisées sur la base des caractéristiques des pièces de raccordement, le joint comprenant :
- Une série de pièces mordantes raccordées les unes aux autres, et présentant sur leur face interne des dents de scie disposées de sorte qu'elles creusent dans le bord extérieur du tuyau
- Moyens de raccordement de pièces mordantes en plastique.
avec les caractéristiques suivantes :
- Les pièces mordantes possèdent des côtés latéraux obliques qui convergent sur leur côté inférieur.
- Les côtés obliques sont équipés d'embrasures circulaires raccordées par un diamètre inférieur à travers le trou
- Les moyens de liaison sont constitués de pièces de raccordement déformables dont les extrémités sont insérées dans les embrasures circulaires prévues sur les côtés des pièces mordantes ;

2. Joint de collier à grand dégagement, selon la demande 1, **caractérisé par** des pièces mordantes ayant un profil triangulaire dans lequel son côté inférieur (17) est horizontal et sur lequel des dents de scie sont disposées ; les deux autres côtés du profil triangulaire, l'un d'eux, le côté intérieur (17) présente une légère inclinaison inférieure à celle du côté extérieur (18) qui présente une inclinaison quasi-verticale et sur lequel le profil incliné (2.1) des dents de scie est disposé presque parallèlement au côté intérieur (14).

3. Joint de collier à grand dégagement, selon la demande 1, **caractérisé par** des pièces de raccordement (4) équipées à leurs extrémités d'épaulements (5) qui s'emboitent dans les embrasures circulaires (3) des pièces mordantes (1), tandis que le côté intérieur des épaulements est disposé obliquement.

4. Joint de collier à grand dégagement, selon la demande 1, **caractérisé par le fait que** l'adaptation du joint aux différents diamètres des tuyaux est réalisée par la déformation de la pièce de raccordement en pliant vers le haut une partie de sa longueur et en engageant cette déformation dans l'espace compris entre les pièces mordantes

5. Joint de collier à grand dégagement, selon la demande 1, **caractérisé par** des pièces mordantes ayant des côtés latéraux obliques qui convergent sur leur côté intérieur, l'un de ces côtés obliques étant équipé d'une embrasure circulaire (3), sur laquelle l'autre côté présente un trou de sonde (7) d'un diamètre inférieur à celui de l'embrasure (3) ; il présente un profil triangulaire dans lequel le côté inférieur est horizontal et sur lequel sont disposées des dents de scie. Les deux autres côtés des profils triangulaires, dont l'un, le côté intérieur (14) présente une inclinaison inférieure à celle du côté extérieur (18) qui présente une inclinaison quasi-verticale. Le profil incliné (2.1) des dents de scie est disposé presque parallèlement au côté intérieur (14).

6. Joint de collier à grand dégagement, selon les demandes 1 à 5, **caractérisé par** une pièce de raccordement équipée à l'une de ses extrémité d'un épaulement qui s'emboîte dans l'embrasure circulaire (3) de la pièce mordante (6), tandis que l'autre extrémité comporte un épaulement de profil frustoconique (9) pour insertion dans l'embrasure (7).

7. Joint de collier à grand dégagement, selon la demande 1 ou 6, **caractérisé par le fait que** l'adaptation du joint aux différents diamètres de tuyau est réalisée en variant la profondeur d'insertion de la pièce mordante (8) ayant un épaulement frustoconique (9) dans l'embrasure de la pièce mordante (6).
